# EUROPEAN PATENT APPLICATION

(11) **EP 2 781 490 A1**
(43) Date of publication of application: **24.09.2014**
(21) Application number: 12859861.2
(22) Date of filing: 13.12.2012
(51) Int. Cl.: C03C 27/12, B60J 1/00

(54) **VEHICLE LAMINATED GLASS AND MANUFACTURING METHOD THEREFOR**

(30) Priority: 20.12.2011 JP 2011278568
(71) Applicant: Central Glass Company, Limited, Yamaguchi 755-0001 (JP)
(72) Inventor: INOUE, Kuniaki, Matsusaka-shi Mie 515-0001 (JP)
(74) Representative: Manitz, Finsterwald & Partner GbR
(86) International application number: PCT/JP2012/082304
(87) International publication number: WO 2013/094505

(57) **Abstract**

In a vehicle laminated glass, in which an interlayer film is sandwiched between two glass plates having at peripheral portions ground portions, when peripheries of the two glass plates overlap with each other, an edge surface of the interlayer film is made to be inside the ground portions of the two glass plates, and, when the periphery of one glass plate of the two glass plates is inside the periphery of the other glass plate, the edge surface of the interlayer film is made to be inside the ground portion of one glass plate which is inside the two glass plates. When this laminated glass is attached to a vehicle body, even in case that a peripheral portion of the laminated glass is not covered with a molding, there occurs no diffused reflection of a light incident on this peripheral portion.

## Description

### TECHNICAL FIELD

The present invention relates to a laminated glass for vehicle front windshields.

### BACKGROUND OF THE INVENTION

In general, a vehicle laminated glass is produced by sandwiching an interlayer film constituted of polyvinyl butyral or the like between two glass plates cut into the same shape, followed by heating and clamping. The surface of the interlayer film is formed with unevenness (hereinafter referred to as embossing) by embossment so as to smoothly conduct degassing when conducting a lamination by sandwiching the interlayer film between the glass plates. Normal steps for producing a vehicle laminated glass are constituted of a film machining step such as cutting the interlayer film to have a size larger than the glass plates used as the laminated glass, a lamination step for forming a glass plate laminated body by sandwiching the interlayer film between the two glass plates, a preliminary edge cutting step for cutting a peripheral portion of the interlayer film projecting a little from the glass plates, a preliminary adhesion step for conducting degassing of the glass plate laminated body, a finishing adhesion step for clamping the interlayer film sandwiched between the two glass plates by heating and compression with an autoclave, and a finishing edge cutting step for cutting a peripheral portion of the interlayer film projecting a little from the two glass plates, along periphery of the glass plates.

As described, for example, in Japanese Patent Application Publication 2000-327376, the above-mentioned finishing edge cutting step has been automated in recent years. It is conducted by cutting the interlayer film projecting from periphery of the laminated glass by bringing a straight tooth, such as a cutter blade, into contact with periphery of the laminated glass and moving the cutter blade along periphery of the laminated glass (Patent Publication 1).

In a glass plate for constituting a laminated glass, periphery of the glass is ground so that section of the periphery has a rounded shape or that periphery of the glass plate is chamfered to have a ground portion. Therefore, at the ground portion of the peripheral portion of the glass plates, the interlayer film is hardly in touch with the surface of the glass plate so that it is not clamped by the two glass plates in the finishing adhesion step. Therefore, at the ground portion, the embossment formed on the surface of the interlayer film remains. Furthermore, even in the finishing edge cutting step, since the cutter is brought into contact with periphery of the laminated glass, it is not possible to completely cut off the interlayer film at a place where it overlaps with the ground portions of the two glass plates. Therefore, it remains as a non-clamped portion of the interlayer film.

Furthermore, in recent years, there also has been a request from car manufacturers for a stepped laminated glass in which a laminated glass is constituted of two glass plates that have similar figures, but are different in glass size. In the stepped laminated glass, of two glass plates constituting the stepped laminated glass, periphery of one glass plate is formed inside the periphery of the other glass plate. Therefore, not only the ground portion of each glass plate, but also the interlayer film is cut long the periphery of a larger glass plate of the two glass plates. Therefore, the non-clamped portion of the interlayer film at the stepped portion is not cut by the finishing edge cutting step, but remains.

Like this, if embossment remains on the surface of the interlayer film at the peripheral portion of the laminated glass, when the light incident on the surface of the laminated glass reaches the peripheral portion of the laminated glass or the embossment of the non-bonded portion of the interlayer film, a diffused reflection of the light occurs, thereby causing a glittering of the peripheral portion of the laminated glass.

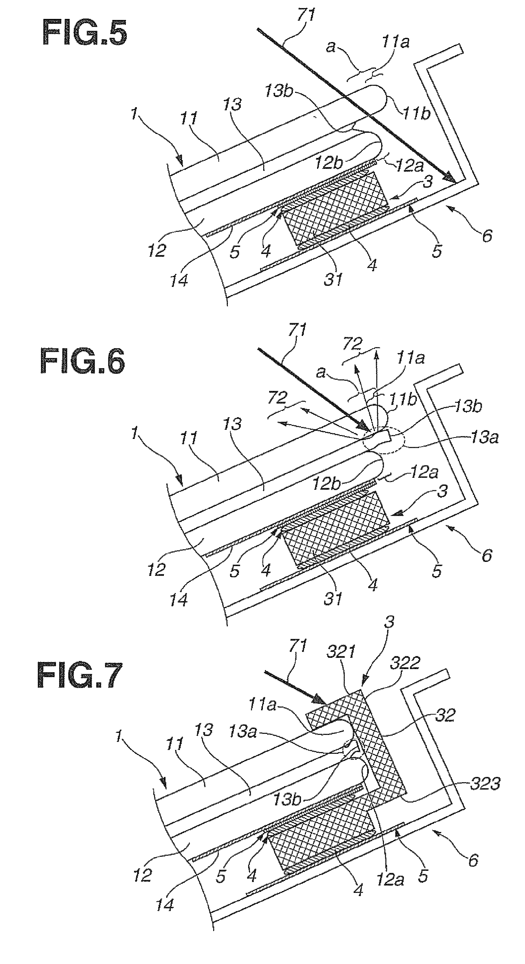

Hitherto, in case that the laminated glass is used as a vehicle front windshield, a molding has been attached to the peripheral portion of the laminated glass so as to cover the periphery of the laminated glass (the vehicle exterior side of the outer glass plate and the vehicle interior side of the inner glass plate) as shown in Fig. 7. Like this, since the peripheral portion on the vehicle exterior side of the outer glass plate has been covered with the molding, there has not been a problem that a diffused reflection of the light incident on the laminated glass occurs at the peripheral portion of the laminated glass to cause a glittering.

### PRIOR ART PUBLICATIONS

### PATENT PUBLICATIONS

Patent Publication 1: Japanese Patent Application Publication 2000-327376.

### SUMMARY OF THE INVENTION

However, in recent years, for the purpose of improving the car design, there has been a demand for attaching a molding to only the vehicle interior side of the inner glass plate or for a molding that covers only the vehicle interior side and the peripheral portion of the inner glass plate, as shown in Fig. 5 and Fig. 6. In the case of using a molding shown in Fig. 5 or Fig. 6, when the non-clamped portion of the interlayer film has not been cut, but remains at the peripheral portion of the laminated glass as shown in Fig. 6, the light incident on the laminated glass is caused to have a diffused reflection at the non-clamped portion of the interlayer film of the peripheral portion of the laminated glass. This may cause a glittering of the peripheral portion of the laminated glass to give uncomfortableness to people outside the vehicle.

The present invention aims to solve this problem. That is, its object is to provide a vehicle laminated glass so as not to make the non-clamped portion of the interlayer film exist at the peripheral portion of the laminated glass not to have a diffused reflection of the light incident on the laminated glass, and a method for manufacturing such vehicle laminated glass.

The present invention provides a vehicle laminated glass in which an interlayer film is sandwiched between two glass plates having ground portions at the peripheral portion of the glass plates. In this vehicle laminated glass, peripheries of the two glass plates are overlapped with each other, or one periphery is inside the other periphery.

When the peripheries of the two glass plates are overlapped with each other, the edge surface of the interlayer film is formed to be inside the ground portions of the two glass plates. When the periphery of one glass plate of the two glass plates is inside the periphery of the other glass plate, the end surface of the interlayer film is formed to be inside the ground portion of the glass plate positioned inside of the two glass plates.

Such formation removes the non-clamped portion of the interlayer film which has not been clamped in the finishing adhesion step of the two glass plates and the interlayer film, but remains at the peripheral portion of the two glass plates. Therefore, even if it has been attached to a vehicle to expose the vehicle exterior surface of the laminated glass, the laminated glass suppresses a diffused reflection of the light incident on the vehicle laminated glass.

It is possible to make the two glass plates have the same shape and to form them so that the peripheries of the two glass plates overlap with each other along the whole circumference of the laminated glass.

Furthermore, it is optional to make the two glass plates have similar figures and form them so that the periphery of one glass plate is inside the periphery of the other glass plate.

In the finishing edge cutting step of the vehicle laminated glass of the present invention, while a blade is pressed at its edge having a V-shaped or generally V-shaped sectional shape against the non-clamped portion of the interlayer film, which is formed along the periphery of the two glass plates, the blade edge is moved along the periphery of the vehicle laminated glass. With this, it is possible to cut off the non-clamped portion of the interlayer film.

### ADVANTAGEOUS EFFECT OF THE INVENTION

According to the present invention, the non-clamped portion of the interlayer film at the peripheral portion of the interlayer film, which is sandwiched between two glass plates constituting a vehicle laminated glass, is removed. Therefore, when a light is incident on the peripheral portion of the laminated glass, it does not cause a diffused reflection of the light by unevenness formed by the embossment on the surface of the non-clamped portion of the interlayer film. This has resulted in no glittering of the peripheral portion of the laminated glass. Therefore, when the laminated glass is attached as a front windshield to a vehicle, even in case that the vehicle exterior surface of the peripheral portion of the laminated glass is not covered with a molding, like conventional laminated glasses, the light incident on the peripheral portion of the laminated glass from the vehicle exterior side does not have a diffused reflection at the peripheral portion. This has resulted in no glittering of the peripheral portion of the laminated glass and no uncomfortableness to people outside the vehicle.

### BRIEF DESCRIPTION OF THE DRAWINGS

Fig. 1 is a sectional view of around the peripheral portion of a vehicle laminated glass according to Example 1;
Fig. 2 is a sectional view of around the peripheral portion of a vehicle laminated glass according to Example 2;
Fig. 3 is a sectional view of around the peripheral portion of a vehicle laminated glass according to Conventional Example 1;
Fig. 4 is a sectional view of around the peripheral portion of a vehicle laminated glass according to Conventional Example 2;
Fig. 5 is a sectional view of around the upper side of a front windshield, when a vehicle laminated glass according to Example 1 has been attached as a vehicle front windshield;
Fig. 6 is a sectional view of around the upper side of a front windshield, when a vehicle laminated glass according to Conventional Example 1 has been attached as a vehicle front windshield;
Fig. 7 is a sectional view of around the upper side of a front windshield when attached as a front windshield, while a conventional molding is bonded to a vehicle laminated glass according to Conventional Example 2 so as to also cover the vehicle exterior surface of the outer glass plate;
Fig. 8 is a sectional view for showing, in a finishing edge cutting step of a vehicle laminated glass according to Example 1, a positional relationship between a V-shaped blade and the laminated glass;
Fig. 9 is a sectional view for showing, in a finishing edge cutting step of a vehicle laminated glass according to Example 2, a positional relationship between a V-shaped blade and the laminated glass;
Fig. 10 is a sectional view for showing, in a finishing edge cutting step of a vehicle laminated glass according to Conventional Example 1, a positional relationship between a straight tooth and the laminated glass;
Fig. 11 is a sectional view for showing, in a finishing edge cutting step of a vehicle laminated glass according to Conventional Example 2, a positional relationship between a straight tooth and the laminated glass;
Fig. 12 is a top view showing a condition of the finishing edge cutting step of a vehicle laminated glass according to Example 1;
Fig. 13 is a top view showing a condition of the finishing edge cutting step of a vehicle laminated glass according to Conventional Example 1;
Fig. 14 is a perspective view of a V-shaped blade used in the finishing edge cutting step of the present invention and a sectional view of a blade edge of the V-shaped blade; and
Fig. 15 is a perspective view showing a condition of a finishing edge cutting step of a vehicle laminated glass according to Example 1.

### DETAILED DESCRIPTION

### <Conventional laminated glass production process>

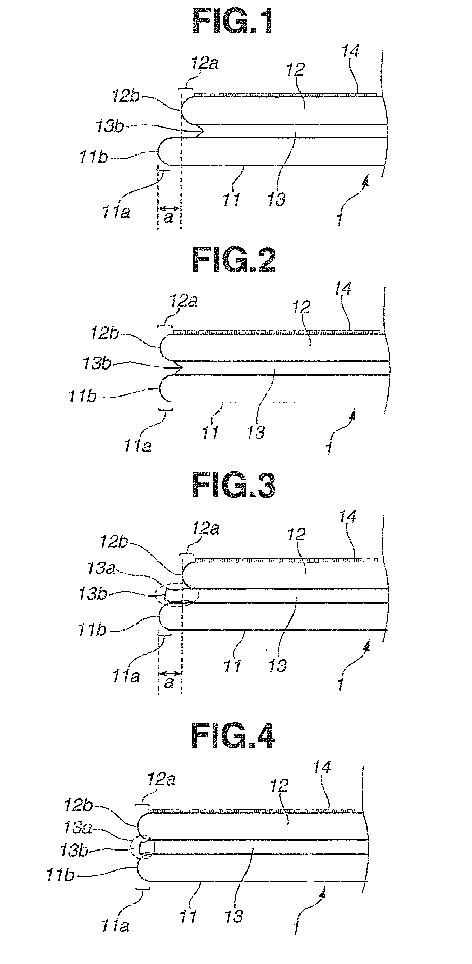

A normal laminated glass has a sectional shape as shown in Fig. 3. Its production steps are constituted of (1) a film machining step, (2) a lamination step, (3) a preliminary edge cutting step, (4) a preliminary adhesion step, (5) a finishing adhesion step, and (6) a finishing edge cutting step.

In the film machining step, an inner glass plate 12 and an outer glass plate 11 are formed into their respective shapes, and their respective edge surfaces are subjected to a grinding treatment to form a ground portion 12a of the inner glass plate and a ground portion 11a of the outer glass plate. An interlayer film 13 is cut into a predetermined size to be larger than both of the inner glass plate 12 and the outer glass plate 11. In general, the surface of the interlayer film is covered with unevenness formed by embossment, and this unevenness makes the glass plate laminated body opaque. In the lamination step, the interlayer film 13 is sandwiched between the inner glass plate 12 and the outer glass plate 11 to form a glass plate laminated body.

The preliminary edge cutting step is a step in which a portion of the interlayer film 13 projecting from the periphery of the two glass plates constituting the glass plate laminated body is cut off to make the projecting portion of the interlayer film 13 less. In the case of conducting the heating and the clamping without the preliminary edge cutting step, the projecting portion of the interlayer film 13 is adhered to the peripheral portion of the two glass plates in the heating and finishing adhesion step so that it cannot be removed.

On the other hand, if it is cut off in the preliminary edge cutting step so that the periphery 13b of the interlayer film is matched with the peripheries 11b, 12b of the two glass plates, when the interlayer film 13 is contracted in the preliminary adhesion step and the finishing adhesion step, the periphery 13b of the interlayer film comes inside the peripheries 11b, 12b of the two glass plates. In general, after the preliminary adhesion step and the finishing adhesion step, the periphery of the interlayer film 13 has an irregular serrated shape. Therefore, if it is left as it is, appearance of the periphery of the laminated glass 1 is greatly damaged.

Since the projecting portion of the interlayer film 13 from the peripheries 11b, 12b of the two glass plates is made to remain after the preliminary adhesion step and the finishing adhesion step, the projecting portion of the interlayer film 13 is cut off normally in the finishing edge cutting step, thereby maintaining appearance of the periphery of the laminated glass 1.

The preliminary adhesion step is a step for conducting degassing of the glass plate laminated body. Since embossment is formed on the surface of the interlayer film 13, degassing is smoothly conducted in this preliminary adhesion step.

In the finishing adhesion step, the glass plate laminated body is put into an autoclave, and the two glass plates 11, 12 and the interlayer film 13, which constitute the glass laminated body, are subjected to heating and clamping by heating and adding pressure. Upon this, a portion of the interlayer film 13, which is interposed between the two glass plates 11, 12, is squeezed by the two glass plates, and unevenness formed by embossment on the surface of the initial interlayer film 13 is broken to become flat. However, a portion of the interlayer film 13, which has not been sandwiched between the two glass plates, that is, a portion projecting from the periphery of the two glass plates and a portion overlapping with the ground portions 11a, 12a of the two glass plates are not clamped by the two glass plates 11, 12, resulting in the non-clamped portion 13a of the interlayer film and the embossing remaining on the surface.

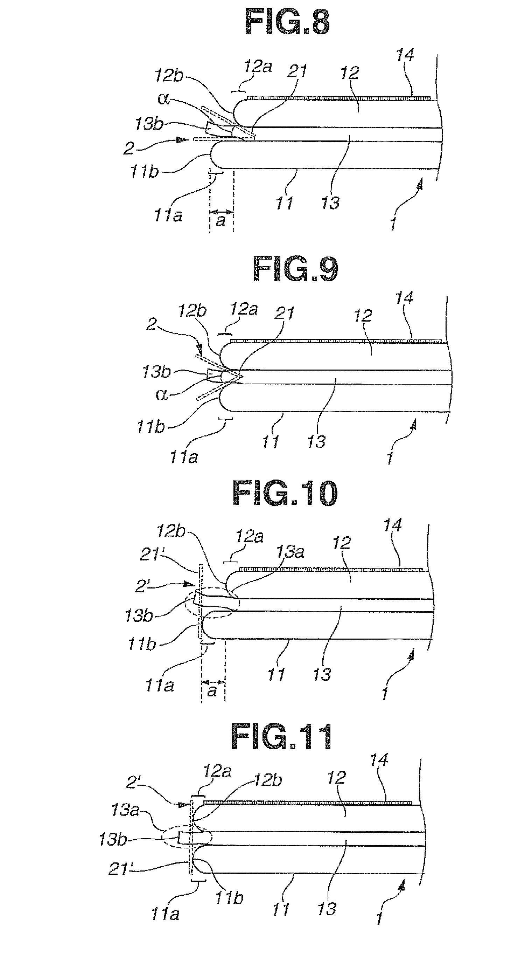

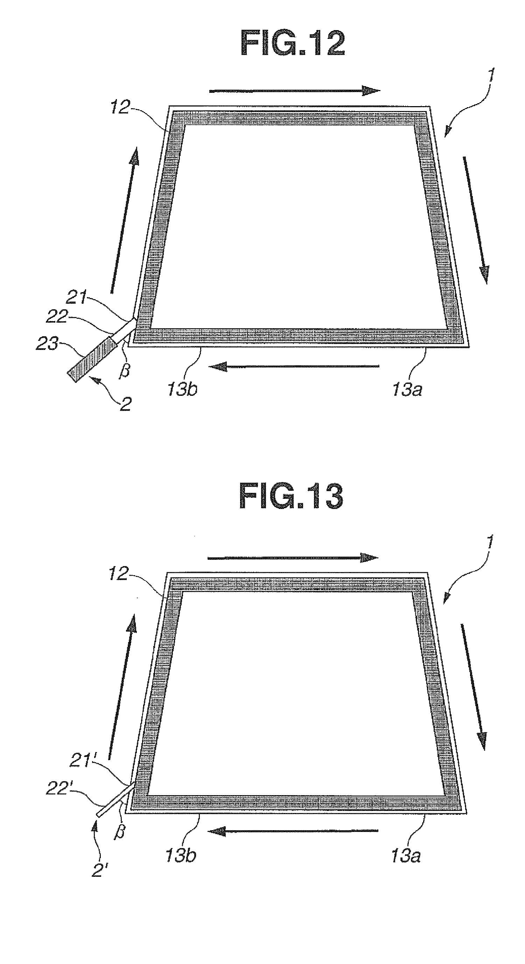

In the finishing edge cutting step, in general, for example, as shown in the sectional view of the laminated glass 1 showing a conventional finishing edge cutting step of Fig. 10, in the case of a stepped laminated glass in which, of the two glass plates 11, 12 constituting the laminated glass 1, the periphery of either one glass plate projects outside of the periphery of the other glass plate, a blade edge 21' of a straight tooth 2', such as razor, is brought into contact with a more outside periphery of the peripheries of the two glass plates, and, as shown in the drawing showing the condition of a conventional finishing edge cutting step of Fig. 13, the straight tooth 2' is moved to make a circuit around the circumference of the laminated glass 1 along the periphery with which the blade edge 21' of the straight tooth is in abutment. At that time, the non-clamped portion 13a of the interlayer film is cut off along the periphery projecting outside of the peripheries of the two glass plates.

Alternatively, as shown in the sectional view of a laminated glass 1 showing a conventional finishing edge cutting step of Fig. 11, in case that respective peripheries of the two glass plates 11, 12 constituting the laminated glass 1 overlap with each other, the blade edge 21' of the straight tooth 2' is brought into abutment with both peripheries of the two glass plates, and, as shown in the drawing showing the condition of a conventional finishing edge cutting step of Fig. 13, the straight tooth 2' is moved to make a circuit around the circumference of the laminated glass 1 along both peripheries with which the blade edge 21' of the straight tooth is in abutment, thereby cutting off the non-clamped portion 13a of the interlayer film so as to go along respective peripheries of the two glass plates.

In the case of conducting the finishing edge cutting step by the straight tooth 2' as mentioned above, in the case of a stepped laminated glass in which either periphery of the peripheries 11b, 12b of the two glass plates constituting the laminated glass 1 projects outside of the other periphery, for example, as explained by the case that the periphery 11b of the outer glass plate projects outside of the periphery 12b of the inner glass plate like the sectional view of a conventional laminated glass of Fig. 3, the periphery 13b of the interlayer film overlaps with the periphery 11b of the outer glass plate, and the non-clamped portion 13a of the interlayer film remains in width "a" of from the periphery of the inner glass plate to the periphery of the outer glass plate and in a range in which it overlaps with the ground portion 12a of the inner glass plate.

When conducting the finishing edge cutting step by the straight tooth 2', in case that the peripheries of the two glass plates constituting the laminated glass 1 overlap with each other in a manner similar to the case that the periphery 11b of the outer glass plate overlaps with the periphery 12b of the inner glass plate as shown in the sectional view of a conventional laminated glass of Fig. 4, the interlayer film 13 sandwiched between the ground portions of the two glass plates remains as the non-clamped portion 13a of the interlayer film.

As mentioned above, in the finishing edge cutting step in a conventional laminated glass production process, the blade edge 21' of the straight tooth 2' is brought into abutment with both peripheries or either periphery of the two glass plates 11, 12 of the laminated glass 1, and only a projecting portion of the interlayer film 13 from the peripheries 11b, 12b of the two glass plates is cut. Therefore, in conventional laminated glasses, like the sectional views of the laminated glasses shown in Fig. 3 and Fig. 4, the non-clamped portion 13a of the interlayer film remains at a peripheral portion of the laminated glass 1.

### <Problems of conventional laminated glasses>

Hitherto, in case that a laminated glass is used as a vehicle front windshield, as shown in the sectional view when a laminated glass of Fig. 7 has been attached as a front windshield to a vehicle, the periphery of the laminated glass 1 is surrounded by an inverse C-shaped portion 32 of a molding 3, and the vehicle exterior surface of the outer glass plate 11 is covered by an upper portion 321 of the inverse C-shaped portion of the molding.

However, in recent years, for the purpose of improving the car design, the periphery of the vehicle exterior surface of the outer glass plate 12 of the laminated glass 1 is sometimes exposed by using a molding from which the upper portion of the inverse C-shaped portion of the molding has been removed in Fig. 7, or by using a molding 3 that is not equipped with the inverse C-shaped portion 32 of the molding, but equipped with only a molding main body portion 31 bonded to only the vehicle interior side of the inner glass plate 12, as shown in the sectional view when the laminated glass of Fig. 6 has been attached as a front windshield to a vehicle. In such a case, when light is incident on the peripheral portion of the laminated glass 1 from the vehicle outside like the incident light 71, there occurs a diffused reflection, like diffuse light 72, by the embossed unevenness remaining on the surface of the non-clamped portion 13a of the interlayer film to cause a glittering of the peripheral portion of the laminated glass 1. This may give uncomfortableness to people outside the vehicle who saw that.

### <Laminated glass of the present invention>

As shown in the sectional view of around a peripheral portion of a laminated glass 1 of Fig. 1, in case that a laminated glass of the present invention is a stepped laminated glass in which, of the peripheries 11b, 12b of two glass plates constituting the laminated glass 1, the periphery of one glass plate projects outside of the periphery of the other glass plate, it is so constructed that the edge surface 13b of the interlayer film is positioned inside the ground portion of the glass plate of which periphery is more inside and that the non-clamped portion 13a of the interlayer film does not exist at the peripheral portion of the laminated glass 1.

Furthermore, as shown in the sectional view of around a peripheral portion of a laminated glass 1, when peripheries 11b, 12b of two glass plates constituting the laminated glass 1 overlap with each other, it is so constructed that the edge surface 13b of the interlayer film is positioned inside the ground portions 11a, 12a of both glass plates and that the non-clamped portion 13a of the interlayer film does not exist at the peripheral portion of the laminated glass 1.

By making the non-clamped portion 13a of the interlayer film not exist at the peripheral portion of the laminated glass 1 like Fig. 1 and Fig. 2, in case that there is used a molding 3 equipped with only a molding main body portion 31 to be bonded to the vehicle interior side of the inner glass plate 12, without being equipped with the inverse C-shaped portion 32 of a molding, like the sectional view when the laminated glass 1 shown in Fig. 5 has been attached as a front windshield to a vehicle, and that the peripheral portion of the vehicle exterior surface of the outer glass plate 12 of the laminated glass 1 is exposed, when the light, like the incident light 71, is incident on the peripheral portion of the laminated glass 1 from the vehicle outside, the incident light 71 is properly reflected and absorbed by the laminated glass 1 and the vehicle body 6. Therefore, in contrast with a conventional laminated glass in which the non-clamped portion 13a of the interlayer film remains at the peripheral portion of the laminated glass, there occurs no glittering of the peripheral portion of the laminated glass 1, thereby giving no uncomfortableness to people outside of the vehicle.

### <Production process of a laminated glass of the present invention>

As to a laminated glass of the present invention, in the finishing edge cutting step of the production process of a conventional laminated glass, the non-clamped portion 13a of the interlayer film of the peripheral portion of the laminated glass 1 is cut off by using a V-shaped blade 2 that is V-shaped or generally V-shaped in the sectional shape of the blade edge.

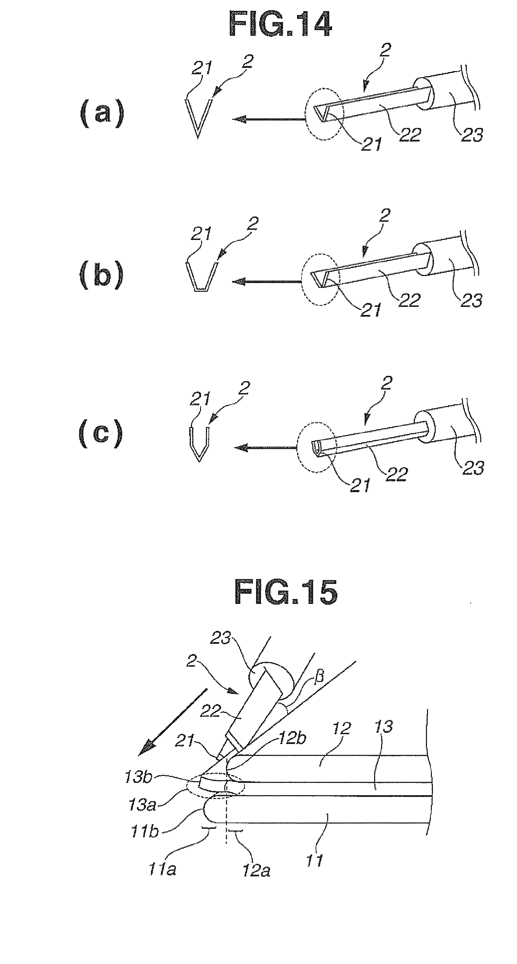

In Fig. 14, as examples of the V-shaped blade and the generally V-shaped blade, there are shown sectional views of the V-shaped and generally V-shaped blades and their respective perspective views. Fig. 14a shows a sectional view of a V-shaped blade on the left and a perspective view of the V-shaped blade on the right. Fig. 14b and Fig. 14c are sectional views and perspective views shown as examples of generally V-shaped blades. In Fig. 14b, the section of the blade edge is not V-shaped, but its tip is flat. In Fig. 14c, the tip of the sectional shape of the blade edge has an acute angle, but a spot away from the tip is vertical, resulting in a shape close to U-shape. In this way, the generally V-shaped blade is not limited to those shown in Fig. 14. It contains a wide variation from V-shaped one to a kind of U-shaped one rather than V-shaped one.

As to the manner of cutting off the non-clamped portion 13a of the interlayer film of the peripheral portion of the laminated glass 1 by using the V-shaped blade 2, like the perspective view showing a condition of conducting the finishing edge cutting step by using the V-shaped blade 2 of Fig. 15, the blade edge 21 of the V-shaped blade 2 having a V-shaped or generally V-shaped sectional shape of the blade edge is inserted between the two glass plates 11, 12 of the laminated glass 1 at angle β to the periphery of the laminated glass, and, while the blade edge 21 of the V-shaped blade is kept in abutment with the surfaces of the two glass plates that sandwich therebetween the interlayer film, like the top view showing a condition of the finishing edge cutting step of Fig. 12, it is moved to make a circuit around the laminated glass 1 along the peripheral portions of the two glass plates constituting the laminated glass 1, thereby completely cutting off the non-clamped portion 13a of the interlayer film. Upon this, like the sectional views of Fig. 8 and Fig. 9 showing a positional relationship between the V-shaped blade 2 and the laminated glass in the finishing edge cutting step, the blade edge 21 of the V-shaped blade is inserted to cut off the non-clamped portion 13a of the interlayer film.

It is possible to determine angle β so as to easily move the V-shaped blade 2 along the laminated glass 1. If possible, it should be set at a low angle to the periphery of the laminated glass. That is, so as to go along the periphery of the glass, it is better that β is as close as possible to 0.

It is possible to improve the operation efficiency by properly determining the angle α between two sides forming V-shape of the blade edge 21 of the V-shaped blade for cutting off the non-clamped portion 13a of the interlayer film so as to be able to completely cut the non-clamped portion 13a of the interlayer film.

Furthermore, not conducting the finishing edge cutting step by only the V-shaped blade 2, it is optional to cut off the non-clamped portion 13a of the interlayer film along the periphery of the laminated glass 1 by using the straight tooth 2' as conducted in a conventional finishing edge cutting step, and then further cut off the non-clamped portion 13a of the interlayer film by using the V-shaped blade 2.

### EXAMPLES

In the following, each example of the present invention is described.

### <Example 1>

Fig. 1 is a sectional view of around the peripheral portion of a vehicle laminated glass according to Example 1 of the present invention. In Example 1, the laminated glass 1 is constituted of the outer glass plate 11, the inner glass plate 12, and the interlayer film 13. By grinding the edge surfaces of the outer glass plate 11 and the inner glass plate 12, the outer glass plate 11 is equipped with the ground portion 11a of the outer glass plate, and the inner glass plate 12 is equipped with the ground portion 12a of the inner glass plate. At the peripheral portion of the inner glass plate 12, a black frame 14 is printed on the surface opposite to the surface with which the interlayer film 13 is clamped. The periphery 11b of the outer glass plate projects outside of the periphery 12b of the inner glass plate. The width "a" from the periphery of the inner glass plate to the periphery of the outer glass plate is designed to be 0.5 mm to 1.5 mm in the whole circumference of the laminated glass 1.

As to the interlayer film 13, like the perspective view showing a condition in which the finishing edge cutting step is conducted by using the V-shaped blade 2 of Fig. 15, the V-shaped blade 2 is made to be along the laminated glass 1 to have the optimum angle β against the periphery of the laminated glass 1. In the finishing edge cutting step of the vehicle laminated glass according to Example 1 of Fig. 8, as shown in the sectional view for showing the positional relationship between the V-shaped blade and the laminated glass, one side of the two sides constituting the V-shape of the blade edge 21 of the V-shaped blade is brought into contact with a position inside the grinding margin surface 12b of the inner glass plate. While the other surface is kept in abutment with the surface of the outer glass plate that is in contact with the interlayer film, like the top view showing a condition of the finishing edge cutting step of Fig. 12, the V-shaped blade is moved to make a circuit along the peripheral portion of the laminated glass 1 to cut off the non-clamped portion 13a of the interlayer film. The edge surface 13b of the interlayer film is positioned inside the ground portion 12a of the inner glass plate. Since the edge surface 13b of the interlayer film has been cut off by the V-shaped blade 2, its section is V-shaped as shown in Fig. 1.

Fig. 5 is a sectional view of around the upper side of the laminated glass 1, when the laminated glass 1 of Example 1 has been attached as a front windshield to a vehicle body. In Fig. 5, the molding 3 is attached to the black frame 14 of the inner glass plate 12 of the laminated glass 1 of Example 1. The molding 3 is made up of only the molding main body portion 31 and is one for covering only the peripheral portion on the vehicle inner side of the inner glass plate 12. A primer is applied on the surface of the black frame 14 of the inner glass plate 12, and the molding 3 is bonded to the inner glass plate 12 by a urethane adhesive. A primer is also applied on the vehicle body surface side, and the other surface of the molding main body portion 31 is bonded to the vehicle body 6 by a urethane adhesive.

By such constitution, the vehicle exterior side of the outer glass plate 11 is not covered with the molding 3, but is exposed. Even if the incident light 71 from the vehicle exterior side is incident on the peripheral portion of the outer glass plate 11, due to no existence of the non-clamped portion 13a of the interlayer film, the incident light 71 was properly reflected and absorbed in the laminated glass 1 or the vehicle body 6, thereby causing no glittering of the peripheral portion of the laminated glass.

Furthermore, even in the case of using a molding having a sectional shape prepared by removing the upper portion 321 of the inverse C-shaped portion of the molding from the molding 3 shown in Fig. 7, there is obtained an advantageous effect similar to that of Example 1.

### <Example 2>

Fig. 2 is a sectional view of around the peripheral portion of a vehicle laminated glass according to Example 2. Example 2 is different from Example 1 in that it is constituted such that the periphery 11a of the outer glass plate and the periphery 12a of the inner glass plate overlap with each other. It is constituted such that the edge surface 13b of the interlayer film is positioned inside the ground portion 11a of the outer glass plate and the ground portion 12a of the inner glass plate.

In the finishing edge cutting step, like the perspective view showing a condition in which the finishing edge cutting step is conducted by using the V-shaped blade 2 of Fig. 15, the V-shaped blade 2 is made to be along the laminated glass 1 to have the optimum angle β against the periphery of the laminated glass 1. As shown in the finishing edge cutting step of the vehicle laminated glass according to Example 2 of Fig. 9, the blade edge 21 of the V-shaped blade 2 is brought into abutment inside the ground portion 12a of the inner glass plate and the ground portion 11a of the outer glass plate. Similar to Example 1, the V-shaped blade 2 is moved to make a circuit along the peripheral portion of the laminated glass 1 to cut off the non-clamped portion of the interlayer film.

As the laminated glass of Example 2 was incorporated into a vehicle body as a front windshield similar to the laminated glass of Example 1, it was found that there was no glittering of the peripheral portion of the laminated glass by the incident light from the vehicle outside, thereby causing no uncomfortableness against people outside the vehicle.

As above, a preferred embodiment has been described, but the present invention is not limited to this, but various applications are considered.

### <Conventional Example 1>

Fig. 3 is a sectional view of around the peripheral portion of a vehicle laminated glass according to Conventional Example 1, which has existed hitherto. The laminated glass of Conventional Example 1 is a stepped laminated glass in which the periphery 11b of the outer glass plate is outside of the periphery 12b of the inner glass plate. Similar to the laminated glass of Example 1, the outer glass plate 11 and the inner glass plate 12 overlap with each other so that the width "a" from the periphery of the inner glass plate to the periphery of the outer glass plate becomes 0.5 mm to 1.5 mm. The non-clamped portion 13a of the interlayer film exists in a range overlapping with the width "a" from the periphery of the inner glass plate to the periphery of the outer glass plate and the ground portion 12a of the inner glass plate.

In the laminated glass of Conventional Example 1, in the finishing edge cutting step in the production process, in the finishing edge cutting step of a vehicle laminated glass according to Conventional Example 1 of Fig. 10, as shown in the sectional view for showing the positional relationship between the straight tooth and the laminated glass, the blade edge 21' of the straight tooth of the straight tooth 2' is brought into abutment with the periphery 11b of the outer glass plate. As shown in the top view showing a condition of the finishing edge cutting step of Fig. 13, it is moved to make a circuit around the circumference of the laminated glass 1 along the periphery of the outer glass of the laminated glass 1, thereby cutting off the non-clamped portion of the interlayer film so that the periphery 13b of the interlayer film is along the periphery 11b of the outer glass plate. Therefore, the non-clamped portion 13a of the interlayer film remains in a range overlapping with the width "a" from the periphery of the inner glass plate to the periphery of the outer glass plate and the ground portion 12a of the inner glass plate.

Fig. 6 is a sectional view of around the upper side portion of the laminated glass 1, when the laminated glass 1 of Conventional Example 1 has been attached as a front windshield to the vehicle body. In Fig. 6, the molding 3 is attached to the black frame 14 of the inner glass plate 12 of the laminated glass 1 of Conventional Example 1. The molding 3 is formed of only a molding main body portion 31 and is one for covering only a peripheral portion on the vehicle inner side of the inner glass plate 12. A primer is applied on the surface of the black frame 14 of the inner glass plate 12, and the molding 3 is bonded to the inner glass plate 12 by a urethane adhesive. A primer is also applied on the vehicle body surface side, and the other surface of the molding main body portion 31 is bonded to the vehicle body by a urethane adhesive.

By such constitution, the vehicle exterior side of the outer glass plate 11 is not covered with the molding 3, but is exposed. If the incident light 71 from the vehicle exterior side is incident on the peripheral portion of the outer glass plate 11, there occurs a diffused reflection by the embossment remaining on the surface of the non-clamped portion 13a of the interlayer film, thereby causing a glittering of the peripheral portion of the laminated glass. Even in the case of using a molding having a sectional shape obtained by removing the upper portion 321 of the inverse C-shaped portion of the molding from the molding 3 shown in Fig. 7, a similar defect occurs in the case of using a conventional laminated glass.

### <Conventional Example 2>

Fig. 4 is a sectional view of around the peripheral portion of a vehicle laminated glass according to Conventional Example 2, which has existed hitherto. Conventional Example 2 is different from Conventional Example 1 in that it is constituted such that the periphery 11b of the outer glass plate and the periphery 12b of the inner glass plate overlap with each other. This Conventional Example 2 is a more general laminated glass. The non-clamped portion 13a of the interlayer film exists at a place where the ground portion 11a of the outer glass plate and the ground portion 12a of the inner glass plate overlap with each other.

In the laminated glass of Conventional Example 2, in the finishing edge cutting step in the production process, in the finishing edge cutting step of a vehicle laminated glass according to Conventional Example 2 of Fig. 11, as shown in the sectional view for showing the positional relationship between the straight tooth and the laminated glass, the blade edge 21' of the straight tooth of the straight tooth 2' is brought into abutment with the periphery 11b of the outer glass plate and the periphery 12b of the inner glass plate. As shown in the top view showing a condition of the finishing edge cutting step of Fig. 13, it is moved to make a circuit around the circumference of the laminated glass 1 along the periphery of the outer glass of the laminated glass 1, thereby cutting off the non-clamped portion of the interlayer film so that the periphery 13b of the interlayer film is along the periphery 11b of the outer glass plate. Therefore, the non-clamped portion 13a of the interlayer film remains in a range overlapping with the ground portion 11a of the outer glass plate and the ground portion 12a of the inner glass plate.

As the laminated glass 1 of Conventional Example 2 was incorporated into a vehicle body as a front windshield similar to the laminated glass 1 of Conventional Example 1, similar to Conventional Example 1, there occurred a diffused reflection of the incident light 71 from the vehicle outside at the non-clamped portion 13a of the interlayer film of the peripheral portion of the laminated glass, thereby causing a glittering of the peripheral portion of the laminated glass 1.

In the case of attaching the laminated glass 1 of Conventional Example 2 as a front windshield to the vehicle body, hitherto, like the sectional view of around the upper side of a front windshield when attaching the laminated glass 1 of Conventional Example 2 of Fig. 7 as a front windshield to the vehicle body, the periphery of the laminated glass 1 has been surrounded by the inverse C-shaped portion 32 of the molding of the molding 3, and the vehicle exterior surface of the outer glass plate 11 has been covered with the upper portion 321 of the inverse C-shaped portion of the molding. By such constitution, the incident light 71 from the vehicle outside is blocked by the upper portion 321 of the inverse C-shaped portion of the molding. Therefore, as shown in Fig. 6, there has been no diffused reflection at the non-clamped portion 13a of the interlayer film of the peripheral portion of the laminated glass, thereby causing no glittering of the peripheral portion of the laminated glass 1.

### EXPLANATION OF SYMBOLS

1: a laminated glass
11: an outer glass plate
11a: a ground portion of the outer glass plate
11b: a periphery of the outer glass plate
12: an inner glass plate
12a: a ground portion of the inner glass plate
12b: a periphery of the inner glass plate
13: an interlayer film
13a: a non-clamped portion of the interlayer film
13b: an edge surface of the interlayer film
14: a black frame
2: a V-shaped blade
21: a blade edge of the V-shaped blade
22: a blade body of the V-shaped blade
23: a haft of the V-shaped blade
2': a straight tooth
21': a blade edge of the straight tooth
22': a blade body of the straight tooth
3: a molding
31: a main body portion of the molding
32: an inverse C-shaped portion of the molding
321: an upper portion of the inverse c-shaped portion of the molding
322: a side portion of the inverse c-shaped portion of the molding
323: a lower portion of the inverse c-shaped portion of the molding
4: a urethane adhesion portion
5: a primer coating portion
6: a front windshield portion of a vehicle body
a: a width from the periphery of the inner glass plate to the periphery of the outer glass plate
α: an angle between two sides constituting a V-shape or generally V-shape of a sectional shape of the blade edge of the V-shaped blade
β: an angle upon making the blade go along the periphery of the laminated glass

## Claims

1. A vehicle laminated glass in which an interlayer film (13) is sandwiched between two glass plates having ground portions (11a, 12a) at their peripheral portions by an edge surface grinding, the vehicle laminated glass being **characterized by** that peripheries (11b, 12b) of the two glass plates overlap with each other, or that one periphery is inside the other periphery,
that, when the peripheries (11b, 12b) of the two glass plates overlap with each other, an edge surface (13b) of the interlayer film is made to be inside the ground portions (11a, 12a) of the two glass plates,
that, when the periphery of one glass plate of the two glass plates is inside the periphery of the other glass plate, the edge surface (13b) of the interlayer film is made to be inside the ground portion of one glass plate which is inside the two glass plates, and
that there is removed a non-clamped portion (13a) of the interlayer film, which has not been clamped in a finishing adhesion step of the two glass plates (11, 12) and the interlayer film (13), but has remained at a peripheral portion of the two glass plates, thereby suppressing a diffused reflection of a light incident on the laminated glass from a vehicle outside, at a peripheral portion of the laminated glass, when attached to a vehicle body to expose a peripheral portion on a vehicle exterior surface of the laminated glass.

2. The vehicle laminated glass as claimed in claim 1, which is **characterized by** that the two glass plates (11, 12) are identical in shape, and the peripheries (11b, 12b) of the two glass plates (11, 12) overlap with each other along a whole circumference of the laminated glass.

3. The vehicle laminated glass as claimed in claim 1, which is **characterized by** that the two glass plates have similar figures, and the periphery of one glass plate is inside the periphery of the other glass plate.

4. A method for manufacturing a vehicle laminated glass, which is **characterized by** that, in a finishing edge cutting step of the vehicle laminated glass as claimed in any one of claims 1 to 3, while a blade (2) having a blade edge (21) that is V-shaped or generally V-shaped in sectional shape is pressed at the blade edge (21) against the non-clamped portion (13a) of the interlayer film, which is formed along the peripheries (11b, 12b) of the two glass plates, the blade edge is moved along the peripheries (11b, 12b) of the vehicle laminated glass, thereby cutting off the non-clamped portion (13a) of the interlayer film.
